# EUROPÄISCHE PATENTSCHRIFT

(11) **EP 1 288 173 B1**
(45) Veröffentlichungstag und Bekanntmachung des Hinweises auf die Patenterteilung: **19.01.2005**
(21) Anmeldenummer: 02018316.6
(22) Anmeldetag: 14.08.2002
(51) Int. Cl.: C03C 17/00, B05B 3/10

(54) **Vorrichtung zum Auftragen von Schutzflüssigkeit auf Glas**
Apparatus for applying a protection fluid onto glass
Dispositif pour appliquer un liquide de protection sur du verre

(30) Priorität: 30.08.2001 DE 20114332 U
(43) Veröffentlichungstag der Anmeldung: 05.03.2003
(73) Patentinhaber: Steuer, Norbert, 86381 Krumbach (DE)
(72) Erfinder: Steuer, Norbert, 86381 Krumbach (DE)
(74) Vertreter: von Albedyll, Joachim, Dipl.-Ing.

(56) Entgegenhaltungen:
- DE-A- 19 500 967
- DE-A- 19 707 031

## Beschreibung

Die Erfindung betrifft eine Vorrichtung zum Auftragen einer Schutzflüssigkeit auf Glas mit einer quer zur Transportrichtung der Glasplatten oder -bänder angeordneten, teilweise in eine die Schutzflüssigkeit enthaltende Wanne eintauchende Walze, die zum Abschleudern von Flüssigkeitströpfchen auf die darunter geführten Glasplatten oder -bänder rotierend angetrieben ist.

Eine derartige Vorrichtung ist aus der DE 197 07 031 bekannt. Zum Auftragen der Schutzflüssigkeit auf breitere Glasplatten oder -bänder sind, da die Walze wegen ihrer Durchbiegung nicht beliebig lang ausgeführt werden kann, hier mehrere vollständige Vorrichtungen erforderlich, die zur Seite und in der Höhe gegeneinander versetzt angeordnet sind. Hierdurch ergibt sich ein großer Bauaufwand.

Der Erfindung liegt die Aufgabe zugrunde, eine gattungsgemäße Vorrichtung zu Aufbringung von Schutzflüssigkeit auf breite Glasplatten oder -bänder zu schaffen, die einen einfachen, platzsparenden Aufbau aufweist.

Erfindungsgemäß wird dies dadurch erreicht, dass die Walze aus mehreren drehfest miteinander verbundenen Walzenteilkörpern zusammen gesetzt ist, zwischen den Walzenteilkörpern jeweils eine von einer Tragstrebe getragene Walzenlagerung angeordnet ist und die Walzenteilkörper hülsenförmige, die Walzenlagerung umgreifende Ansätze aufweisen, deren Außenflächen mit den Außenflächen der Walzenteilkörper fluchten sowie sich bis zur Tragstrebe erstrecken. Diese Maßnahmen ermöglichen es, mit nur einer einheitlichen Vorrichtung beliebig breites Glas zu besprühen.

Nach einer Ausgestaltung der Erfindung weist jede Walzenlagerung zwischen zwei Walzenteilkörpern eine von der Tragstrebe getragene Lagerhülse auf, in der eine Verbindungswelle gegen axiale Verschliebung gesichert gelagert ist, an deren Enden in Bohrungen in den Stirnseiten der Walzenteilkörper eingreifende Paßstifte angebracht sind. Hierdurch wird in einfacher Weise ohne Verschraubungen eine gegen Verdrehung gesicherte Verbindung zwischen zwei Walzenteilkörpern geschaffen.

Vorzugsweise weist die Verbindungswelle einen Mittelteil größeren Durchmessers auf, der beidseitig an den inneren Lagerschalen zweier Wälzlager anliegt und die inneren Lagerschalen auf den Seitenteilen der Verbindungswelle sitzen während die äußeren Lagerschalen in die Lagerhülse eingesetzt sind. Durch diese Maßnahmen wird eine axiale Festlegung der Verbindungswelle und damit auch der Walzenteilkörper erreicht.

Vorteilhaft ist auf jeden Seitenteil der Verbindungswelle ein Ring aufgesetzt, der axiale Bohrungen zur Aufnahme der einen Enden der Paßstifte und eine durchlaufende radiale Bohrung zur Aufnahme eines den Seitenteil und die beiden Paßstifte durchsetzenden Fixierstiftes aufweist. Hierdurch wird ein Zusammenbau der Teile ohne Schraubverbindungen lediglich durch Steckverbindungen ermöglicht.

Ein Ausführungsbeispiel der Erfindung ist anhand der Zeichnung beschrieben.

In der Zeichnung zeigt:
- Fig. 1: einen Längsschnitt durch die wesentlichen Teiel einer Welle beim Zusammenbau und
- Fig. 2: eine der Figur 1 entsprechende Darstellung nach dem Zusammenbau.

Zur Verbindung zweier Walzenteilkörper 1, 2 ist auf eine Grundplatte 3, die den Boden einer Wanne bilden kann, eine Tragstrebe 4 fest aufgesetzt. Die Tragstrebe 4 ist fest, z.B. durch Verschweissen, mit einer insgesamt mit 5 bezeichneten Lagerhülse verbunden. Die Lagerhülse 5 weist einen mittleren Abschnitt 6 mit geringerem Innendurchmesser und zwei seitliche Abschnitte 7, 8 mit größerem Innendurchmesser auf. In die seitlichen Abschnitte 7, 8 ist je ein Wälzlager 9, 10 eingesetzt. Die Wälzlager dienen zur Lagerung einer insgesamt mit 11 bezeichneten Verbindungswelle.

Die Verbindungswelle 11 weist einen Mittelteil 12 größeren Außendurchmessers und zwei Seitenteile 13, 14 kleineren Außendurchmessers auf. Dabei sind auf die Seitenteile 13, 14 die inneren Lagerschalen 15, 16 der Wälzlager 9, 10 derart aufgebracht, dass sie gleichzeitig an den Stirnseiten des Mittelteiles 12 anliegen. Die äußeren Lagerschalen 17, 18 sind in die seitlichen Abschnitte 7, 8 der Lagerhülse 5 eingesetzt und stützen sich in axialer Richtung an den Stirnseiten des mittelren Abschnitts 6 der Lagerhülse 5 ab. Diese Teile bilden die Walzenlagerung.

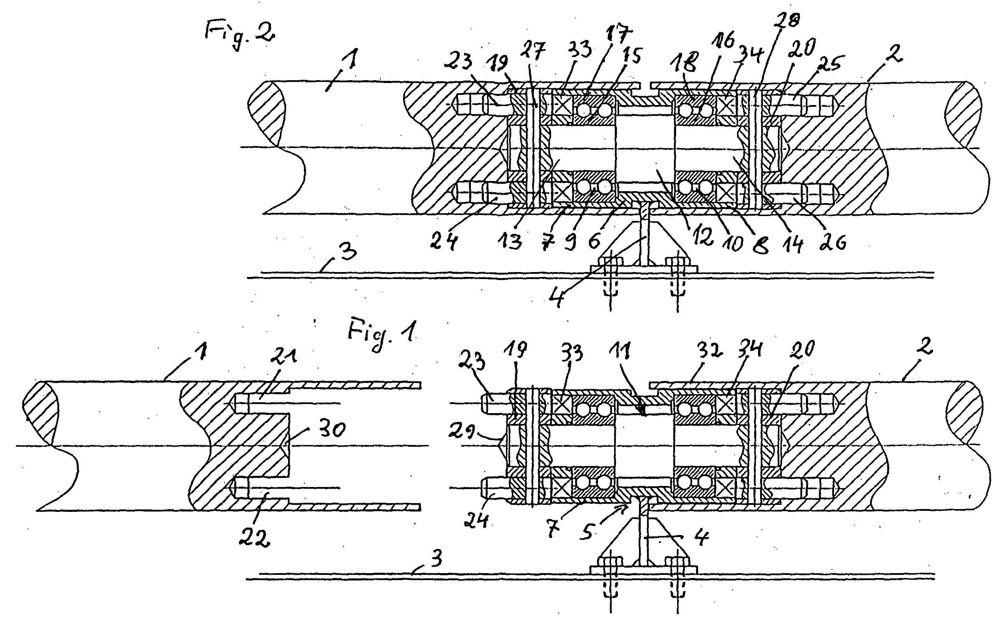

Auf die äußeren Enden der Seitenteile 13, 14 ist je ein Ring 19, 20 aufgeseztt. Jeder Ring 19, 20 weist eine durchlaufende radiale Bohrung und zwei axiale Bohrungen, die zweckmäßig um 180° gegeneinander versetzt sind, auf. Die radiale Bohrung fluchtet mit einer entsprechenden Bohrung in dem Seitenteil 13 bzw. 14. Jede axiale Bohrung kann einen Paßstift 23, 24 bzw. 25, 26 aufnehmen. Jeder Paßstift 23 bis 26 weist ebenfalls eine radiale Bohrung auf. Durch die miteinander fluchtenden radialen Bohrungen im Ring 19 bzw. 20, im Seitenteil 13 bzw. 14 und im Paßstift ist ein Fixierstift 27 bzs. 28 gesteckt, der somit die Paßstifte 23, 24 bzw. 25, 26 drehfest und gegen axiale Verschiebung gesichert mit der Verbindungswelle 11 verbindet. Die Paßstifte z. B. 23, 24 können in axiale Bohrungen 21, 22 in den Walzenteilkörpern z.B. 1 eingebracht werden, wie Figur 1 zeigt. Sie verbinden dann die Walzenteilkörper 1, 2 über die Verbindungswelle 11 miteinander. Weiterhin können an den Stirnseiten der Seitenteile 13, 14 der Verbindungswelle 11 Zentrieransätze z.B. 29 vorgesehen sein, die beim Zusammenbau in entsprechende Vertiefungen, z.B. 30 in den Stirnseiten der Walzenteilkörper 1, 2 eintreten.

Die Walzenteilkörper 1, 2 sind mit hülsenförmigen Ansätzen 32 versehen, deren Außenflächen mit den Außenflächen der Walzenteilkörper 1, 2 fluchten. Die Ansätze 32 erstrecken sich im zusammengebauten Zustand aller Teile bis zur Tragstrebe 4. Die aus dem Walzenteilkörper 1, 2 zusammengesetzte Walze weist daher eine weitgehend durchlaufende, nur durch sehr schmale Schlitze im Bereich der Tragstreben 4 unterbrochene Außenfläche auf, die auf eine gleichmäßige Befeuchtung des Glases nicht störend einwirken. In gleicher Weise können auch mehr als zwei Walzenteilkörper zusammengesetzt werden.

Nach außen sind die Wälzlager 9, 10 durch ringförmige Dichtungen 33, 34 abgedeckt, so dass die durch die Spalten zwischen der Außenfläche der Lagerhülse 5 und den Innenflächen der Ansätze 32 eindringende Schützflüssigkeit nicht bis zu den Wälzlagern 9, 10 vordringen kann.

## Patentansprüche

1. Vorrichtung zum Auftragen einer Schutzflüssigkeit auf Glas mit einer quer zur Transportrichtung der Glasplatten oder -bänder angeordneten, teilweise in eine die Schutzflüssigkeit enthaltende Wanne eintauchende Walze, die zum Abschleudern von Flüssigkeitströpfchen auf die darunter geführten Glasplatten oder -bänder rotierend angetrieben ist, **dadurch gekennzeichnet, dass** dass die Walze aus mehreren drehfest miteinander verbundenen Walzenteilkörpern (1, 2) zusammen gesetzt ist, zwischen den Walzenteilkörpern (1, 2) jeweils eine von einer Tragstrebe (4) getragene Walzenlagerung angeordnet ist und die Walzenteilkörper (1, 2) hülsenförmige, die Walzenlagerung umgreifende Ansätze (32) aufweisen, deren Außenflächen mit den Außenflächen der Walzenteilkörper (1, 2) fluchten sowie sich bis zur Tragstrebe (4) erstrecken.

2. Vorrichtung nach Anspruch 1, **dadurch gekennzeichnet, dass** jede Walzenlagerung zwischen zwei Walzenteilkörpern (1, 2) eine von der Tragstrebe (4) getragene Lagerhülse (5) aufweist, in der eine Verbindungswelle (11) gegen axiale Verschliebung gesichert gelagert ist, an deren Enden in Bohrungen in den Stirnseiten der Walzenteilkörper (1, 2) eingreifende Paßstifte (23 bis 26) angebracht sind.

3. Vorrichtung nach Ansurch 2, **dadurch gekennzeichnet, dass** die Verbindungswelle (11) einen Mittelteil (12) größeren Durchmessers aufweist, der beidseitig an den inneren Lagerschalen (15, 16) zweier Wälzlager (9, 10) anliegt und die inneren Lagerschalen (15, 16) auf den Seitenteilen (13, 14) der Verbindungswelle (11) sitzen während die äußeren Lagerschalen (17, 18) in die Lagerhülse (5) eingesetzt sind.

4. Vorrichtung nach Anspruch 2 oder 3, **dadurch gekennzeichnet, dass** auf jeden Seitenteil (13, 14) der Verbindungswelle (11) ein Ring (19, 20) aufgesetzt ist, der axiale Bohrungen zur Aufnahme der einen Enden der Paßstifte (23 bis 26) und eine durchlaufende radiale Bohrung zur Aufnahme eines den Seitenteil (13 bzw. 14) und die beiden Paßstifte (23, 24 bzw. 25, 26) durchsetzenden Fixierstiftes (27 bzw. 28) aufweist.

## Claims

1. Apparatus for applying a protective fluid to glass with a roller that is arranged transversely in relation to the direction of transportation of the glass plates or tapes, dips partly into a trough containing the protective fluid and is driven in a rotating manner in order to centrifuge droplets of fluid onto the glass plates or tapes that are guided underneath, **characterised in that** the roller is composed of a plurality of partial roller bodies (1, 2) that are connected together in a secure manner with respect to rotation, arranged between the partial roller bodies (1, 2) there is a respective roller mounting supported by a supporting strut (4), and the partial roller bodies (1, 2) have sleeve-shaped projections (32) that embrace the roller mounting and the outer faces of which are in alignment with the outer faces of the partial roller bodies (1, 2) and also extend as far as the supporting strut (4).

2. Apparatus according to claim 1, **characterised in that** each roller mounting has, between two partial roller bodies (1, 2), a bearing sleeve (5) that is supported by the supporting strut (4) and in which a connecting shaft (11) is mounted in a secured manner so as to prevent axial displacement, provided at the ends of which shaft (11) there are fitting pins (23 to 26) that engage into bores in the end faces of the partial roller bodies (1, 2).

3. Apparatus according to claim 2, **characterised in that** the connecting shaft (11) has a central portion (12) that is of a comparatively large diameter and rests on both sides against the inner bearing shells (15, 16) of two rolling bearings (9, 10), and the inner bearing shells (15, 16) sit on the side portions (13, 14) of the connecting shaft (11), whilst the outer bearing shells (17, 18) are inserted into the bearing sleeve (5).

4. Apparatus according to claim 2 or 3, **characterised in that** set on each side portion (13, 14) of the connecting shaft (11) there is a ring (19, 20) that has axial bores to receive the one ends of the fitting pins (23 to 26) and a continuous radial bore to receive a fixing pin (27 or 28 respectively) that passes through the side portion (13 or 14 respectively) and the two fitting pins (23, 24 or 25, 26 respectively).

## Revendications

1. Dispositif pour appliquer un liquide de protection sur du verre, comprenant, transversalement à la direction de transport des plaques ou bandes de verre et partiellement immergé dans un bac contenant le liquide de protection, un cylindre entraîné en rotation pour projeter des gouttelettes de liquide sur les plaques ou bandes de verre guidées en dessous,
**caractérisé en ce que**
le cylindre est assemblé à partir de plusieurs corps partiels de cylindre (1, 2) reliés les uns aux autres solidaires en rotation, avec chaque fois entre les corps partiels de cylindre (1, 2), un logement de cylindre porté par une entretoise de support (4), et les corps partiels de cylindre (1, 2) présentent des tétons (32) en forme de douille entourant le logement de cylindre et dont les surfaces extérieures sont alignées aux surfaces extérieures des corps partiels de cylindre (1, 2) en s'étendant également jusqu'à l'entretoise de support (4).

2. Dispositif selon la revendication 1,
**caractérisé en ce qu'**
entre deux corps partiels de cylindre (1, 2) chaque logement de cylindre présente une douille de logement (5) portée par l'entretoise de support (4) et qui loge un arbre de liaison (11) freiné au niveau du déplacement axial, et dont les extrémités comportent des goujons d'assemblage (23 à 26) s'engageant dans des alésages prévus dans les faces frontales des corps partiels de cylindre (1, 2).

3. Dispositif selon la revendication 2,
**caractérisé en ce que**
l'arbre de liaison (11) présente une partie centrale (12) d'un diamètre plus grand qui s'applique de part et d'autre contre les coquilles de coussinet intérieures (15, 16) de deux paliers à roulement (9, 10), les coquilles de coussinet intérieures (15, 16) étant placées sur les parties latérales (13, 14) de l'arbre de liaison (11), tandis que les coquilles de coussinet extérieures (17, 18) sont insérées dans la douille de logement (5).

4. Dispositif selon la revendication 2 ou 3,
**caractérisé en ce que**
sur chaque partie latérale (13, 14) de l'arbre de liaison (11) est placée une bague (19, 20) qui présente des alésages axiaux pour recevoir une extrémité des goujons d'assemblage (23 à 26), ainsi qu'un alésage radial traversant pour recevoir un goujon de fixation (27 ou 28) traversant la partie latérale (13 ou 14) et les deux goujons d'assemblage (23, 24 ou 25, 26).
